# FASCICULE DE BREVET EUROPEEN

(11) **EP 1 299 318 B1**
(45) Date de publication et mention de la délivrance du brevet: **06.09.2006**
(21) Numéro de dépôt: 01955419.5
(22) Date de dépôt: 12.07.2001
(51) Int. Cl.: C03B 37/04, D04H 3/03, D04H 3/08, D04H 1/72, D04H 13/00, E04B 1/76

(54) **PRODUIT D'ISOLATION THERMIQUE/PHONIQUE A BASE DE LAINE MINERALE ET SON PROCEDE DE FABRICATION**
PRODUKT AUS MINERALWOLLE ZUR THERMISCHEN/AKUSTISCHEN ISOLIERUNG UND VERFAHREN ZUR HERSTELLUNG
HEAT /SOUND INSULATION PRODUCT BASED ON MINERAL WOOL AND METHOD

(30) Priorité: 13.07.2000 FR 0009268
(43) Date de publication de la demande: 09.04.2003
(73) Titulaire: SAINT-GOBAIN ISOVER, 92400 Courbevoie (FR)
(72) Inventeur: BEAUFILS, Sébastien, F-60190 Cernoy (FR); CALERO, Claire, F-11290 Arzens (FR)
(74) Mandataire: Muller, René
(86) Numéro de dépôt international: PCT/FR2001/002282
(87) Numéro de publication internationale: WO 2002/006171

(56) Documents cités:
- EP-A- 0 091 381
- EP-A- 0 710 631
- WO-A-95/14135
- WO-A-96/19337
- US-A- 5 624 742

## Description

La présente invention concerne des produits d'isolation thermique et/ou phonique à base de laine minérale, notamment à base de laine de verre ou à base de laine de roche ou de basalte.

Elle concerne également leur mode d'obtention, notamment par un procédé dit de centrifugation. Ce procédé consiste, de façon connue, à introduire un filet de verre fondu dans un centrifugeur, encore appelé assiette de fibrage, tournant à grande vitesse et percé à sa périphérie par un très grand nombre d'orifices par lesquels le verre est projeté sous forme de filaments sous l'effet de la force centrifuge. Ces filaments sont alors soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par une bande perméable aux gaz. Pour plus de détails sur ce procédé, on pourra notamment se reporter aux brevets EP-A-0 189 354, EP-A-0 519 797 et EP-A-0 406 107.

On connaît par le document US-A-5 624 742 un procédé qui se propose de mélanger deux types de fibres minérales, fabriquées indépendamment l'un de l'autre, pour constituer un mélange prêt à être projeté.

L'invention s'intéresse aussi bien aux produits d'isolation dits « légers », c'est-à-dire présentant généralement une densité d'au plus 40 kg/m³, qu'aux produits d'isolation dits « lourds », de densité supérieure à 40 kg/m³ jusqu'à par exemple 160 kg/m³, qu'ils soient ou non revêtus sur au moins une partie de leur surface extérieure d'un parement.

Un certain nombre de ces produits, suivant notamment leur forme, leur densité, la quantité d'encollage utilisée, est répertorié et défini dans la norme NFB 20-001 d'Août 1988. En fait, ces différents produits sont souvent le résultat de compromis entre différentes propriétés, notamment leurs propriétés mécaniques et leurs propriétés d'isolation, compromis adaptés selon les applications envisagées.

Ainsi, il peut être nécessaire d'avoir des produits d'isolation particulièrement performants sur le plan mécanique : il s'agit notamment des produits d'isolation supportant des éléments de maçonnerie et qui doivent par conséquent résister à des fortes compressions tels que les éléments servant à l'isolation des toitures-terrasses accessibles à la circulation. C'est aussi le cas des produits utilisés en isolation pour l'extérieur et qui doivent pouvoir, notamment, résister aux efforts à l'arrachement. Dans ce cas, on privilégie des produits « lourds », dont la laine minérale présente un micronaire généralement élevé.

Par contre, si ces produits ne sont pas destinés à être très sollicités mécaniquement (par exemple des produits pour isoler des toitures entre des chevrons ou des murs ou plafonds entre des éléments d'encadrement ou les bâtiments de construction métallique, notamment pour les bâtiments à vocation industrielle usuellement désignés aux USA sous le terme de Metal Building Insulation ou « MBI »), on privilégie des produits « légers », plus faciles à manipuler, meilleurs sur le plan de l'isolation thermique, dont la laine minérale présente généralement un micronaire ou un diamètre moins élevé et/ou une longueur de fibre plus importante, et/ou un taux d'encollage moindre.

Tout compromis a cependant ses limites. L'invention a alors pour but de repousser ces limites, c'est-à-dire de proposer de nouveaux produits (et leur procédé de fabrication) qui soient améliorés, dont on puisse notamment ajuster de façon plus fine ou plus souple leurs propriétés ou auxquels on puisse conférer de nouvelles fonctionnalités.

L'invention a tout d'abord pour objet un produit d'isolation thermique et/ou phonique à base de laine minérale, du type de ceux décrits plus haut, mais qui présente dans son épaisseur des variations dans au moins une de ses caractéristiques, notamment dans la dimension des fibres de la laine minérale ou dans la composition chimique de celle-ci.

Ces variantes peuvent induire, dans l'épaisseur du produit, des variations dans ses propriétés, tout particulièrement dans ses propriétés mécaniques et/ou ses propriétés d'isolation thermique/phonique. Elles peuvent aussi permettre d'améliorer les propriétés de réaction ou de résistance au feu, ou conférer superficiellement au matériau isolant un caractère hydrophobe, ou plus généralement toute propriété influençable par modification ou ajout d'un ou plusieurs agents dans un encollage.

L'invention a ainsi découvert l'intérêt d'un produit d'isolation dont les propriétés varient dans son épaisseur. On a aussi un produit composite dans ses caractéristiques/dans ses propriétés. On peut aussi différencier le produit entre ses propriétés de surface et ses propriétés « à coeur », en conservant un produit se décomposant en « strates » différentes, mais ayant cependant la cohésion interne des produits d'isolation standard.

Les produits d'isolation visés par l'invention sont, notamment, ceux répertoriés dans la norme précitée. Il s'agit notamment des « feutrés », à savoir de la laine minérale encollée souple, fournie sous forme de « rouleaux » ou de « bandes » dont l'épaisseur est généralement comprise entre 20 et 300 mm. Il s'agit aussi des « nappes cousues » qui sont à base de laine minérale faiblement encollée revêtue sur une seule face d'un parement, ou de « panneaux » qui sont à base de laine minérale encollée rigide ou semi-rigide. Ces produits sont tous généralement d'une forme approximativement parallélépipédique.

L'invention peut aussi s'appliquer à des produits de formes géométriques différentes, comme les « segments » qui sont des éléments plans de section trapézoïdale. Il peut aussi s'agir de produits utilisés pour isoler des conduits, connus sous le nom de « coquilles » (cylindre annulaire en un ou deux éléments) ou de « douelles » (éléments de cylindre dont la section est un secteur annulaire). De façon générale, au sens de l'invention et dans la suite du présent texte, par souci de concision, si le terme « feutre » est utilisé, il englobe aussi par extrapolation les produits voisins évoqués ci-dessus.

Si on prend donc l'exemple d'un feutre, de forme approximativement parallélépipédique, il présente deux faces extérieures principales.
Selon un mode de réalisation de l'invention, le feutre présente sur au moins une partie de son épaisseur des strates de caractéristiques/propriétés différentes. Le feutre peut ainsi compendre au moins deux strates adjacentes (issues de deux organes de fibrage adjacents), ayant des dimensions de fibres, des compositions différentes. Le produit peut ainsi comporter n strates, avec n > 2, chaque strate x étant en contact avec au moins une autre strate x + 1 différente. Bien sûr, entre deux strates, il y a une interface qui est "diffuse" en ce sens qu'elles sont imbriquées, le produit dans son ensemble gardant sa cohérence.

Selon une variante préférée de ce mode de réalisation de l'invention, le feutre présente sur au moins une partie de l'une de ses faces extérieures une « strate superficielle » de caractéristiques/propriétés différentes de celles du produit à coeur. On a ainsi une ou deux strates superficielles fines différentes de la strate médiane correspondant au produit "à coeur".

Cette strate superficielle peut par exemple être constituée d'une laine minérale dont les fibres sont de micronaire (ou de diamètre) plus faible que celles de la laine minérale du reste du produit. L'intérêt est double : d'une part, il s'est avéré que des fibres ainsi amincies en surface étaient plus souples, plus agréables au toucher. Ceci est intéressant quand la surface extérieure en question n'est pas destinée à être revêtue par un parement. D'autre part, un amincissement en surface des fibres peut avoir un impact favorable sur la capacité d'isolation thermique ou acoustique du produit dans son ensemble. Les fibres à coeur, moins fines, sont, elles, optimisées en prenant davantage en compte des considérations d'ordre mécanique.

Cette strate superficielle peut aussi alternativement ou cumulativement, être constituée de laine minérale dont les fibres sont plus longues que dans le reste du produit. Il a été ainsi montré qu'en ayant des fibres plus allongées en surface, le toucher était encore amélioré. Une hypothèse pour expliquer cela est que des fibres allongées offrent globalement moins d'extrémités qui sont autant de points « d'accrochage » que l'on peut sentir en passant la main sur le produit.

Le fait de ne modifier les dimensions des fibres qu'en surface permet de conserver les propriétés mécaniques des produits d'isolation standard.

Cette strate superficielle peut également, alternativement ou cumulativement avec les caractéristiques mentionnées plus haut, peut être modifiée chimiquement.

De façon connue, les produits d'isolation intéressant l'invention sont de préférence munis dans leur épaisseur d'une composition d'encollage dont la fonction est notamment d'assurer la cohésion du produit en créant des liaisons inter-fibres. Les compositions d'encollage contiennent généralement des résines à base de phénol, de formaldéhyde et d'urée. Les inventeurs se sont aperçus que cet encollage, bien qu'extrêmement utile, contribuait à donner en surface un toucher un peu rigide, cassant.

Pour améliorer ce toucher, on a muni la laine minérale d'une composition d'encollage dans toute son épaisseur, mais avec une teneur moindre dans la « strate superficielle » définie plus haut : le toucher du produit est ainsi rendu plus agréable, en baissant suffisamment modérément la teneur en encollage en surface du produit pour qu'il n'y ait pas d'impact négatif sur sa cohésion interne.

Une autre façon de modifier superficiellement la composition chimique de la laine minérale consiste à l'imprégner d'une composition supplémentaire aux propriétés adoucissantes. Cette composition comporte de préférence au moins un surfactant, notamment au moins un surfactant de la famille des surfactants cationiques, qui se sont avérés les plus efficaces. Au sens de l'invention, on entend par surfactant cationique un surfactant porteur d'une charge positive nette (un « vrai » sel cationique, comme par exemple un sel d'amidoamine ou d'imidazolinium), mais également un surfactant porteur d'une charge délocalisée (comme par exemple un oxyde d'amine). Dans cette famille, on préfère notamment les produits avec une ou plusieurs chaînes d'acides gras ou dérivés d'acide gras, et comportant un ou plusieurs groupements azotés susceptibles de porter une charge positive, nette ou délocalisée. Ces groupements peuvent être des amines primaires, secondaires, tertiaires, des ammoniums quaternaires ou des oxydes d'amine. Ils paraissent particulièrement intéressants car ils interagissent avec la surface du verre qui, elle, est plutôt ionisée de façon négative. Ce sont les groupements azotés qui fixent la molécule aux fibres. Cette fonctionnalité chimique conférerait à la molécule la capacité à se fixer de façon durable à la fibre, tandis que les chaînes grasses (hydrocarbures) lui donneraient la douceur recherchée.

Les surfactants les plus intéressants sont par exemple des sels d'ammonium quaternaire ou d'imidazolinium à chaînes grasses (avec par exemple un contre-ion du type acétate) ou des oxydes d'amine à chaînes grasses (par exemple le stéaryl diméthyl oxyde d'amine), avec une liaison dative entre l'oxygène et l'azote, les acétates d'amidoamine. Les chaînes grasses (hydeocarbures) sont dérivés d'acides gras qui sont du type CH3(CH2)nCOOH quand ils sont saturés. Il peut aussi s'agir d'acides gras insaturés. Des exemples d'acide gras dont des dérivés peuvent être utilisés dans la composition des surfactants sont l'acide stéarique, l'acide laurique, l'acidepalmitique, l'acide myristique. On peut aussi mentionner les acides gras insaturés comme l'acide oléique ou linoléique. Les chaînes carbonées peuvent être ramifiées.

On peut aussi, alternativement ou cumulativement, utiliser un surfactant non-ionique, notamment de la famille des esters gras.

Le fait de ne traiter que superficiellement le produit par cette composition adoucissante présente deux avantages considérables :
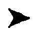 d'une part, il a été montré que la présence de surfactant dans toute l'épaisseur du matériau n'était pas nécessaire pour obtenir l'effet recherché,
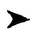 d'autre part, il est plus simple et moins coûteux de ne traiter qu'une partie du produit, par exemple en bout de ligne sur chacune de ses faces, plutôt que d'avoir à le traiter à coeur,
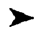 enfin, il est ainsi possible d'appliquer à la surface du produit une composition adoucissante dont le principe actif, le surfactant, serait incompatible avec la composition d'encollage non réticulée.

L'invention s'intéresse aussi à d'autres objectifs qu'un toucher plus agréable, et vise notamment les propriétés mécaniques du produit.

La "strate superficielle" définie plus haut peut ainsi être constituée de laine minérale dont les fibres ont un micronaire ou un diamètre plus élevé que dans le coeur du produit. Cela conduit à renforcer mécaniquement la surface extérieure du produit. Cela est particulièrement judicieux quand le produit en question est destiné à être enroulé. Dans ce cas, si sa surface « externe » est ainsi renforcée (c'est-à-dire la face apparente une fois le rouleau constitué), elle est plus apte à résister aux fortes sollicitations mécaniques impliquées par l'enroulement sur lui-même du feutre.

Dans tous les cas de figure des strates superficielles modifiées qui ont été décrites plus haut, on préfère que ces modifications n'affectent qu'une épaisseur réduite du produit d'isolation, par exemple au plus 2 à 4 cm, ou encore 1 à 10 mm. Cette épaisseur peut ainsi ne représenter que 1/5^{ème} ou 1/6^{ème}, ou, de façon plus générale, entre 1/3 et 1/10^{ème} au plus de l'épaisseur totale du feutre (ces chiffres étant à multiplier par deux si le produit est modifié superficiellement sur ses deux faces principales et non sur une seule).

Il est également dans le cadre de l'invention que ces modifications, qu'elles concernent la dimension des fibres ou leur composition chimique, soient obtenues de façon progressive dans l'épaisseur du produit : on peut ainsi avoir un gradient de concentration en encollage, une augmentation ou diminution graduelle du diamètre ou de la longueur des fibres.

L'invention n'est pas non plus limitée à une modification portant exclusivement sur les zones superficielles du produit : il peut y avoir une succession de « strates » dans le produit dont les caractéristiques varient d'une strate à l'autre, à la manière d'un produit composite multicouches.

L'invention a également pour objet un procédé de fabrication d'un produit d'isolation thermique et/ou phonique à base de laine minérale (notamment celui décrit plus haut), par centrifugation interne. Selon l'invention, on utilise une ligne de production comprenant n organes de fibrage en série, avec n > 2, et on règle de façon différente au moins un paramètre de fibrage de deux organes de fibrage successifs sur la ligne.

Comme cela est détaillé notamment dans les brevets cités en préambule de la présente demande, les lignes de production de laine de verre par centrifugation interne comportent généralement une pluralité de centrifugeurs, en série (en général entre 2 et 8 centrifugeurs ou plus). Les fibres qui s'en échappent sous l'effet de la force centrifuge sont collectées sur des organes de réception du type tapis aspirant. Les fibres provenant de chaque centrifugeur s'accumulent en nappes successives sur le tapis, qui les emmène ensuite à travers une étuve et/ou des couteaux de conformation. Le traitement thermique subi lors du passage dans l'étuve permet de sécher, réticuler et durcir la composition d'encollage pulvérisée sur les fibres juste en dessous du centrifugeur, avant qu'elles ne soient collectées.

En réglant différemment au moins un des organes de fibrage par rapport aux autres, on peut ainsi conférer à au moins une des « nappes » de fibres des caractéristiques différentes des autres, et obtenir ainsi le produit composite à plusieurs strates évoqué plus haut. C'est une solution ingénieuse, qui permet de donner beaucoup plus de souplesse dans les propriétés du produit d'isolation, sans pour autant bouleverser le fonctionnement d'une ligne de production standard.

Quand on modifie ainsi un ou plusieurs paramètre(s) de fibrage du premier (ou des deux premiers) et/ou du dernier (ou des deux derniers) organes de fibrage, on obtient le produit à une ou deux strates superficielles différentes décrit plus haut: un produit auquel on peut conférer en surface une fonctionnalité supplémentaire ou des propriétés différentes de celle du produit à coeur (aspect/toucher plus agréable, renforcement mécanique, propriétés thermiques, acoustiques, esthétiques).

On comprend au sens de l'invention par « premier » ou « dernier » organe, les organes qui se trouvent respectivement le plus en amont ou le plus en aval de la ligne, ou encore les organes qui fabriquent respectivement la nappe de fibres qui va se trouver la plus proche ou la plus éloignée de la surface du tapis de convoyage (ou de tout autre type de moyen de convoyage) du matelas de fibre composé de l'ensemble des nappes de fibres issues des organes de centrifugation.

Si on reprend la constitution conventionnelle du type d'organe de fibrage utilisé dans l'invention, il comprend :
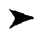 un centrifugeur apte à tourner autour d'un axe, notamment vertical, et dont la bande périphérique est percée d'une pluralité d'orifices,
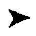 un moyen d'étirage gazeux à haute température sous forme d'un brûleur annulaire,
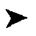 éventuellement un moyen pneumatique pour canaliser/ajuster la dimension des fibres sous forme d'une couronne de soufflage.
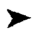 éventuellement un moyen pour appliquer une composition d'encollage sur les fibres issues du centrifugeur, par exemple sous forme d'une couronne de pulvérisation d'encollage.

Le paramètre de fibrage que l'on peut régler différemment suivant l'organe de fibrage est avantageusement choisi parmi l'un des paramètres suivantes :
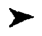 la quantité ou la nature de la composition d'encollage distribuée par le moyen d'application de ladite composition,
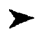 la pression des gaz émis par le brûleur annulaire,
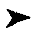 la pression des gaz émis par la couronne de soufflage,
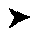 le nombre (et/ou la taille, la répartition) des orifices du centrifugeur.

On peut modifier aussi d'autres paramètres, comme la température des gaz émis à la sortie du brûleur annulaire, la vitesse des gaz émis par le brûleur annulaire, la température du verre, la viscosité du verre, la composition chimique du verre, la température du centrifugeur (« l'assiette ») ...

Un autre type de modification dans les conditions de fibrage (cumulable avec les précédentes) consiste à ajouter une étape supplémentaire : l'application sur les fibres issues du centrifugeur en question d'une composition aux propriétés adoucissantes, notamment contenant un surfactant de type cationique. Cette application peut se faire à l'aide d'une couronne de pulvérisation similaire à celle que l'on peut utiliser pour appliquer la composition d'encollage : un tel traitement permet d'avoir un toucher plus doux du produit.

Selon un mode de réalisation, on peut modifier un paramètre, alternativement ou cumulativement, pour créer des strates dans le produit ayant des fibres plus longues que dans les autres strates. On modifie les paramètres de préférence du premier (ou des deux premiers) et/ou du dernier (ou des deux derniers) organes de fibrage, de façon à ce que le produit présente une strate superficielle (sur une de ses faces) ou deux (sur chacune de ses faces).

Pour cela, on modifie avantageusement :
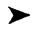 la pression des gaz émis par la couronne de soufflage dudit ou desdits centrifugeurs.

On peut ainsi diminuer la pression des gaz émis par la couronne de soufflage par rapport aux autres couronnes de soufflage de la ligne, une diminution notamment d'au moins 20% et de préférence comprise entre 30 et 50% par rapport à celles des autres couronnes. Une pression plus faible va en effet tendre à moins casser les fibres, à préserver leur longueur.

Des fibres plus longues sont plus douces au toucher.

Selon un second mode de réalisation, on peut chercher à amincir les fibres (diminuer leur micronaire/leur diamètre), en modifiant alternativement ou cumulativement, deux autres paramètres de fibrage de certains des organes de fibrage, notamment du premier ou des deux premiers et/ou du dernier ou des deux derniers organes de fibrage, à savoir :
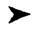 la pression des gaz émis par le brûleur annulaire,
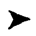 le perçage du centrifugeur.

On peut ainsi augmenter la pression du brûleur annulaire, de par exemple 10 à 25% par rapport à celle des autres brûleurs, ce qui augmente la vitesse des gaz d'étirage et augmente ainsi la finesse des fibres. On peut aussi augmenter le nombre de trous de l'assiette du centrifugeur, de par exemple 15 à 25% par rapport au nombre de trous des autres assiettes : à pression de brûleur maintenue identique aux autres, on observe la même tendance à l'amincissement des fibres.

On peut ainsi obtenir un produit qui sur au moins une de ses faces a superficiellement des fibres plus minces, plus douces au toucher notamment.

Si on veut plutôt un renforcement mécanique d'une des faces au moins du produit, on peut au contraire vouloir des fibres de micronaire ou de diamètre plus élevé. Ce micronaire plus élevé permet aussi d'améliorer le collage d'un support sur le feutre de matériau isolant, ou de faciliter une impression à la surface de celui-ci.

Dans ce cas, on va diminuer la pression du (des) brûleur(s) évoqué(s) plus haut, notamment de 10 à 20% par rapport aux autres brûleurs et/ou diminuer le nombre de trous du (des) centrifugeur(s) évoqué(s) plus haut, de par exemple 15 à 25% par rapport aux autres centrifugeurs.

Selon un autre mode de réalisation, on peut utiliser moins d'encollage dans une partie du produit d'isolation, notamment dans les zones superficielles du produit final. Pour réaliser cela, on peut en fait projeter une quantité moindre de composition d'encollage sur les fibres issues du premier et/ou du dernier organe de fibrage par rapport à tous les autres organes de fibrage. La diminution peut être par exemple de l'ordre d'au moins 10 à 20% en poids.

L'invention sera décrite plus en détails ci-après à l'aide des figures suivantes :
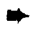 figure 1 : une vue schématique d'une ligne de production de laine de verre par centrifugation interne,
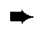 figure 2 : une vue schématique d'un centrifugeur de ladite ligne.

Les figures sont volontairement très schématiques et ne sont pas représentées à l'échelle, pour faciliter leur lecture.

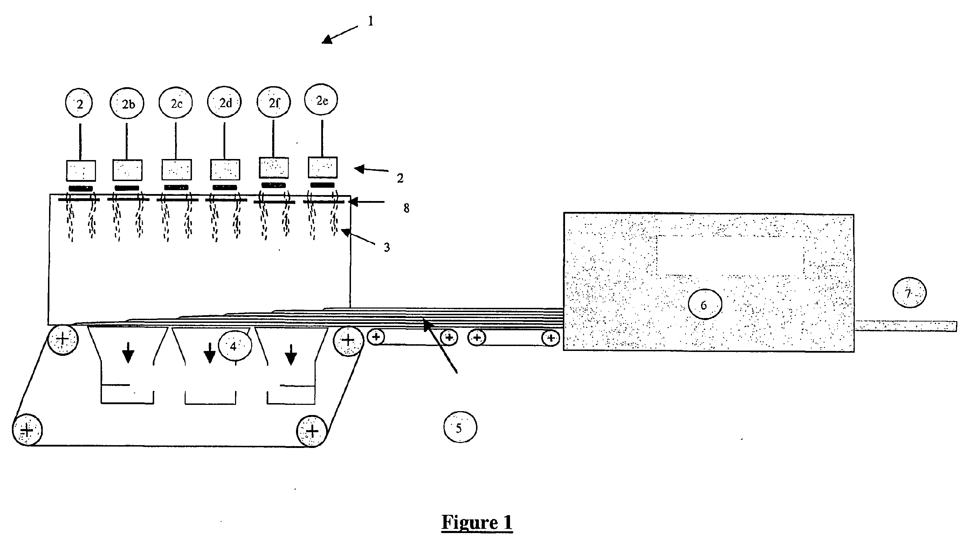

Les exemples de réalisation, non limitatifs, qui suivent, concernent tous la fabrication de feutres de laine de verre d'une densité d'environ 8 à 12 kg/m³, de dimensions 60 x 80 x 120 mm³ , que l'on fabrique sur une ligne de production du type de celle représentée très schématiquement en figure 1. Ces feutres peuvent être pour certains munis sur une de leurs faces d'un parement de type papier kraft (par exemple).

Si on se rapporte à la figure 1, on a donc une ligne 1 comprenant six centrifugeurs 2a, 2b, 2c, 2d, 2e, 2f en série, d'où sont éjectées sous forme d'un tore des fibres 3. Ces fibres sont encollées à l'aide de couronnes de pulvérisation 8, puis recueillies sur un tapis convoyeur aspirant 4. Ce tapis les transporte sous forme d'une bande continue 5 jusqu'à une étuve 6 qui est munie de rouleaux de conformation et qui vient durcir l'encollage de fibres et donner au feutre 7 les dimensions, l'épaisseur voulues. En sortie d'étuve, la bande continue de feutre va ensuite être découpée en panneaux sensiblement parallélépipédiques, puis conditionnée en rouleaux, ou bandes repliées ou non, et emballés. (la fin de la ligne n'est pas représentée).

### EXEMPLE 1

Le but est dans cet exemple de conférer au feutre un toucher particulièrement agréable et doux sur une de ses faces, celle qui n'est pas destinée à être revêtue d'un parement, sans modifier par ailleurs significativement les autres propriétés du feutre (propriétés mécaniques, propriétés d'isolation thermique).

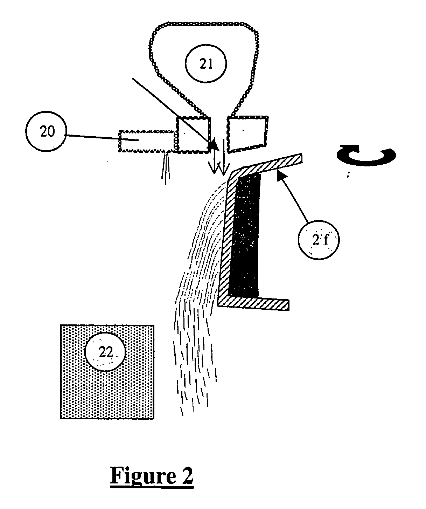

On ne décrira pas ici en détails le fonctionnement d'un centrifugeur, tel que représenté en figure 2. Il est décrit dans les brevets précités. On rappelle qu'il est entouré d'un brûleur annulaire 21 émettant un jet de gaz chaud à haute vitesse et d'une couronne de soufflage 20. N'est pas représentée la couronne d'encollage. Optionnellement, on utilise un dispositif de chauffage de la partie inférieure du centrifugeur sous forme d'un anneau d'induction magnétique 22.

On a donc modifié la pression des gaz émis par la couronne de soufflage 20 du dernier centrifugeur 2f, afin que les fibres soient superficiellement de micronaire plus faible que dans le reste de l'épaisseur du feutre, sur une de ses faces.

La vitesse de rotation de tous les centrifugeurs 2a à 2e est réglée à 1900 rotations par minute.

La pression des couronnes de soufflage des centrifugeurs 2a à 2e est de 1,2 bar.

La pression de la couronne de soufflage du centrifugeur 2f a été abaissée à 0,5 bar (en prenant soin que cet abaissement n'élargisse pas trop le tore des fibres sortant du centrifugeur, afin d'éviter tout risque que des fibres entrent au contact de l'inducteur 22).

De fait, le feutre obtenu présente, une fois passé entre les rouleaux de conformation et dans l'étuve une strate superficielle d'environ 2 à 5 mm (l'épaisseur totale du feutre étant de 60 mm) où les fibres ont un micronaire abaissé d'environ 0,2 par rapport au reste du feutre. Il est difficile d'évaluer la longueur des fibres par des techniques d'analyse courante. Il a par contre été vérifié que la surface du produit ainsi modifiée était plus douce. Ses propriétés mécaniques sont inchangées par rapport à un feutre standard.

### EXEMPLE 2

Cet exemple a pour but de modifier chimiquement le feutre en surface; du côté de sa face extérieure non destinée à être munie d'un parement.

On utilise une solution de la composition adoucissante suivante :
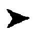 phase aqueuse
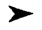 surfactant cationique à 0,025%, 0,05% et 0,1% en poids par rapport à la phase aqueuse en poids, constitué par un surfactant comprenant 90% d'un acétate d'acide gras et 10% d'acide acétique. L'acétate répond à la formule chimique suivante :
   octadecanamide, N-[2[[2-[[2-[(2-aminoéthyl)amino]éthyl]amino]éthyl]amino] éthyl]- monoacétate (9Cl), de formule moléculaire C26 H57 N5 O.C2 H4 O2.

Ce produit se présente sous forme de flocons dispersables dans l'eau.

Selon une première variante, on ajoute sous la couronne d'encollage du dernier centrifugeur 2f une seconde couronne de pulvérisation alimentée avec cette composition adoucissante.

Selon une seconde variante, on a pulvérisé avec une rampe de pulvérisation cette composition au-dessus du matelas de fibres juste avant son entrée dans l'étuve de réticulation.

Selon une troisième variante, on a pulvérisé la composition sur le matelas de fibres juste à la sortie de l'étuve.

Des essais selon la seconde variante ont été faits de façon à ce que la teneur en surfactant à la surface du produit soit d'environ 0,2 g/m² de surface traitée. La composition a imprégné le feutre sur une épaisseur d'environ 1 à 2 mm.

Il a été vérifié que les faces des feutres ainsi traitées sont d'un toucher particulièrement agréable. Les propriétés mécaniques du produit ne sont pas affectées.

Les exemples ci-dessus se rapportent à un type de ligne de production de laine de verre, mais l'invention n'est pas limitée à ce type particulier. Elle peut s'appliquer identiquement aux feutres de laine de verre fabriqués sur une ligne où les centrifugeurs sont groupés en modules, avec pour chaque module un système de réception des fibres au sortir des centrifugeurs à l'aide de rouleaux. On trouvera une description détaillée de ce type de ligne dans le brevet EP-B-0 406 107 précité : à chaque « module » correspond la formation d'un « primitif », et tous les primitifs sont rassemblés avant d'être conduits sous la forme d'un feutre unique dans l'étuve.

En conclusion, l'invention a permis de mettre en évidence l'intérêt d'avoir des produits d'isolation en laine minérale dont les propriétés peuvent être modifiées superficiellement (ou dans l'épaisseur même du produit). C'est un concept très intéressant de ne pas avoir tous les organes de fibrage de la ligne fonctionnant selon les mêmes paramètres, qui permet de faire des produits présentant des « strates » différenciées, pour atteindre notamment de meilleurs compromis entre propriétés mécaniques, propriétés thermiques, propriétés acoustiques et propriétés d'aspect.

## Revendications

1. Procédé de fabrication d'un produit d'isolation thermique et/ou phonique à base de laine minérale par centrifugeur interne, avec une ligne de production comprenant n organes de fibrage en série, avec n > 2, ***caractérisé en ce qu'on*** règle de façon différente au moins un paramètre de fibrage de deux organes de fibrage successifs sur la ligne de production.

2. Procédé selon la revendication 1, ***caractérisé en ce qu'on*** règle au moins un paramètre de fibrage du premier ou des deux premiers et/ou du dernier ou des deux derniers organes de fibrage de façon différente du réglage adopté pour les autres organes de fibrage de la ligne.

3. Procédé selon la revendication 1 ou la revendication 2, ***caractérisé en ce que*** chaque organe de production comprend :
- un centrifugeur apte à tourner autour d'un axe, notamment vertical, et dont la bande périphérique est percée d'une pluralité d'orifices,
- un moyen d'étirage gazeux à haute température sous forme d'un brûleur annulaire,
- éventuellement un moyen pneumatique pour canaliser les fibres sous forme d'une couronne de soufflage.
- éventuellement un moyen pour appliquer une composition d'encollage sur les fibres issues du centrifugeur, par exemple sous forme d'une couronne de pulvérisation d'encollage.

4. Procédé selon la revendication 3, ***caractérisé en ce que*** le paramètre de fibrage, que l'on règle différemment suivant l'organe de fibrage, est choisi parmi l'un au moins des paramètres suivants :
- la quantité ou la nature de la composition d'encollage distribuée par le moyen pour appliquer ladite composition,
- la pression des gaz émis par la couronne de soufflage,
- le nombre d'orifices du centrifugeur,
- la composition chimique du verre, sa viscosité, sa température,
- la température ou la vitesse des gaz émis par le brûleur annulaire,
- la température du centrifugeur.

5. Procédé selon l'une des revendications précédentes, ***caractérisé en ce que*** le paramètre de fibrage que l'on règle différemment est l'ajout, pour certain(s) des organes de fibrage, d'une étape d'application d'une composition aux propriétés adoucissantes, contenant un surfactant du type cationique at/ou non-ionique, notamment par un moyen du type couronne de pulvérisation.

6. Procédé selon la revendication 3 ou 4, ***caractérisé en ce que* :**
- la pression des gaz émis par la couronne de soufflage du premier et/ou du dernier organe de fibrage est inférieure à celle des autres organes de fibrage, notamment d'au moins 20% et de préférence entre 30 et 50% inférieure, notamment de façon à ce que le produit d'isolation présente une strate superficielle sur au moins une partie de sa surface extérieure présentant des fibres plus longues.

7. Procédé selon la revendication 3, 4 ou 6, ***caractérisé en ce que* :**
- la pression des gaz émis par le brûleur annulaire du premier ou des deux premiers et/ou du dernier ou des deux derniers organe(s) de fibrage est supérieure à celle des brûleurs des autres organes, notamment d'environ 10 à 25%,
- et/ou le nombre de trous du centrifugeur du premier ou des deux premiers et/ou du dernier ou des deux derniers centrifugeur(s) est supérieur à celui des autres centrifugeurs, notamment ayant 15 à 25% de trous en plus,
notamment de façon à ce que le produit d'isolation présente une strate superficielle présentant sur au moins une partie de sa surface extérieure des fibres de diamètre ou de micronaire moins élevé.

8. Procédé selon la revendication 3, 4 ou 6, ***caractérisé en ce que* :**
- la pression des gaz émis par le brûleur annulaire du premier ou des deux premiers et/ou du dernier ou des deux derniers organe(s) de fibrage est inférieure à celle des brûleurs des autres organes, notamment d'environ 10 à 25%,
- et/ou le nombre de trous du centrifugeur du premier ou des deux premiers et/ou du dernier ou des deux derniers centrifugeur(s) est inférieur à celui des autres centrifugeurs, notamment ayant 15 à 25% de trous en moins,
notamment de façon à ce que le produit d'isolation présente une strate superficielle présentant sur au moins une partie de sa surface extérieure des fibres de diamètre ou de micronaire plus élevé.

9. Procédé selon l'une des revendications 3, 4, 6, 7 ou 8, ***caractérisé en ce qu'on*** projette une quantité moindre de composition d'encollage sur les fibres issues du premier ou des deux premiers et/ou du dernier ou des deux derniers organe(s) de fibrage, notamment au moins 10 ou 20% de composition d'encollage en moins, de façon à ce que le produit d'isolation présente superficiellement sur au moins une partie de sa surface extérieure une teneur en encollage plus réduite que dans son épaisseur.

10. Produit d'isolation thermique et/ou phonique à base de laine minérale, notamment obtenu selon le procédé conforme à l'une des revendications précédentes, ***caractérisé en ce qu'il*** présente dans ses strates, avec n nombre de strates et n > 2 de son épaisseur des variations dans au moins une de ses caractéristiques, notamment des variations dans la dimension des fibres de la laine minérale ou dans la composition chimique de ladite laine minérale dudit produit.

11. Produit d'isolation thermique et/ou phonique à base de laine minérale, notamment obtenu selon le procédé conforme à l'une des revendications 1 à 9, ***caractérisé en* ce *qu'******il*** présente dans son épaisseur des variations dans ses propriétés mécaniques et/ou dans ses propriétés d'isolation thermique/phonique et/ou dans ses propriétés de réaction ou de résistance au feu et/ou dans son caractère hydrophobe.

12. Produit d'isolation thermique et/ou phonique selon la revendication 10 ou la revendication 11, ***caractérisé en ce qu'il*** se présente sous forme d'un feutre présentant des strates de caractéristiques/propriétés différentes, et notamment présentant sur au moins une de ses faces une strate superficielle de caractéristiques/propriétés différentes de celles du produit à coeur

13. Produit d'isolation thermique et/ou phonique selon la revendication 12, ***caractérisé en ce que*** les fibres de la laine minérale sont de micronaire ou diamètre plus faible et/ou de longueur plus importante sur une strate superficielle de l'une au moins des faces dudit produit, notamment afin de conférer audit produit un toucher plus agréable.

14. Produit d'isolation thermique selon la revendication 12 ou la revendication 13, ***caractérisé en ce que*** les fibres de la laine minérale ont une teneur en composition d'encollage plus réduite et/ou différente et/ou sont imprégnées d'une composition supplémentaire aux propriétés adoucissantes comportant un surfactant, sur une strate superficielle de l'une au moins des faces dudit produit, notamment afin de conférer audit produit un toucher plus agréable.

15. Produit d'isolation thermique et/ou phonique selon la revendication 12, ***caractérisé en ce que*** les fibres de la laine minérale ont un micronaire ou diamètre plus élevé sur une strate superficielle d'une au moins des faces dudit produit, notamment afin de conférer audit produit une surface extérieure renforcée mécaniquement ou d'améliorer le collage d'un support ou de faciliter l'impression sur ladite strate superficielle.

16. produit d'isolation selon la revendication 15, ***caractérisé en ce qu'il*** s'agit d'un feutre destiné à être enroulé, sa surface externe étant renforcée mécaniquement.

17. Utilisation du procédé selon l'une des revendications 1 à 9 pour obtenir un produit d'isolation thermique/phonique aux propriétés thermiques/mécaniques/chimiques/acoustiques/ de résistance au feu, d'hydrophobie ou d'aspect variant dans son épaisseur.

## Claims

1. Process for manufacturing a thermal and/or acoustic insulation product based on mineral wool by internal centrifuging, with a production line comprising n fiberizing members in series, with n>2, ***characterized in that*** at least one fiberizing parameter of two successive fiberizing members in the production line are set differently.

2. Process according to Claim 1, ***characterized in that*** at least one fiberizing parameter of the first or of the first two and/or of the last or of the last two fiberizing members are set differently from the setting adopted for the other fiberizing members of the line.

3. Process according to Claim 1 or Claim 2, ***characterized in that*** each production member comprises:
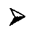 a spinner capable of rotating about an axis, especially a vertical axis, the peripheral band of the spinner being pierced with a plurality of holes;
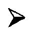 a hot-gas extending means in the form of an annular burner;
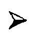 optionally, a pneumatic means for channelling the fibres, in the form of a blowing ring; and
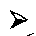 optionally, a means for applying a sizing composition to the fibres coming from the spinner, for example in the form of a sizing spray ring.

4. Process according to Claim 3, ***characterized in that*** the fiberizing parameter that is set differently depending on the fiberizing member is chosen from at least one of the following parameters:
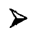 the amount or the nature of the sizing composition delivered by the means for applying the said composition;
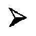 the pressure of the gases emitted by the annular burner,
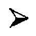 the pressure of the gases emitted by the blowing ring,
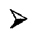 the number of holes in the spinner,
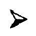 the chemical glass composition, the viscosity, the temperature,
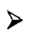 the temperature or the speed of the gases emitted by the annular burner,
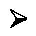 The temperature of the spinner.

5. Process according to one of the preceding claims, ***characterized in that*** the fiberizing parameter that is adjusted differently is the addition, for one or more fiberizing members, of a step of applying a composition having softening properties, containing a cationic-type surfactant and/or non ionic surfactant, especially by a means of the spray ring type.

6. Process according to Claim 3 or 4, ***characterized in that*:**
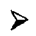 the pressure of the gases emitted by the blowing ring of the first and/or of the last fiberizing member is less than that of the other fiberizing members, especially at least 20% and preferably between 30 and 50% less, especially so that the insulation product has a surface layer, on at least one part of its external surface, having longer fibres.

7. Process according to Claim 3, 4 or 6, **characterized in that**:
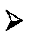 the pressure of the gases expelled by the annular burner of the first or of the first two and/or of the last or of the last two fiberizing members is greater than that of the burners of the other members, especially approximately 10 to 25% greater;
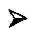 and/or the number of holes in the spinner of the first or of the first two and/or of the last or of the last two spinners is greater than that in the other spinners, especially 15 to 25% greater, especially so that the insulation product has a surface layer with, on at least one part of its external surface, fibres having a smaller diameter or lower micronaire value.

8. Process according to Claim 3, 4 or 6, ***characterized in that**:*
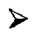 the pressure of the gases emitted by the annular burner of the first or of the first two and/or of the last or of the last two fiberizing members is less than that of the burners of the other members, especially approximately 10 to 25%.
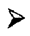 and/or the number of holes in the spinner of the first or of the first two and/or of the last or of the last two spinners is less than that in the other spinners, especially having 15 to 25% holes less, especially so that the insulation product has a surface layer with, on at least one part of its external surface, fibres having a larger diameter or higher micronaire value.

9. Process according to one of Claims 3, 4, 6, 7 or 8, ***characterized in that*** a smaller amount of sizing composition is sprayed onto the fibres coming from the first or from the first two and/or from the last or from the last two fiberizing members, especially at least 10 or 20% less sizing composition, so that the insulation product has, on the surface, on at least one part of its external surface, a lower sizing content than within its thickness.

10. Thermal and/or acoustic insulation product based on mineral wool, obtained especially by the process according to one of the preceding claims, ***characterized in that*** it exhibits, through its layers, with n number of layers and n>2, of its thickness, variations in at least one of its characteristics, especially variations in the size of the fibres of the mineral wool or in the chemical composition of the said mineral wool.

11. Thermal and/or acoustic insulation product based on mineral wool, obtained especially by the process according to one of the preceding claims, ***characterized in that*** it exhibits, through its thickness, variations in its mechanical properties and/or its thermal/acoustic insulation properties, and/or in its capacity to react or resist fire and/or in its hydrophobicity.

12. Thermal and/or acoustic insulation product according to Claim 10 or Claim 11, ***characterized in that*** that it is in the form of a felt having layers having different characteristics/properties, and having notably on at least one of its faces, a surface layer with characteristics/properties which are different from those of the product at its core.

13. Thermal and/or acoustic insulation product according to Claim 12, ***characterized in that*** the fibres of the mineral wool have a lower micronaire value or a smaller diameter and/or a greater length on a surface layer of at least one of the faces of the said product, especially so as to give the said product a more agreeable feel.

14. Thermal insulation product according to Claim 12 or Claim 13, ***characterized in that*** the fibres of the mineral wool have a lower and/or different content of sizing composition and/or are impregnated with an additional composition having softening properties, comprising a surfactant, on a surface layer of at least one of the faces of the said product, especially so as to give the said product a more agreeable feel.

15. Thermal and/or acoustic insulation product according to Claim 12, ***characterized in that*** the fibres of the mineral wool have a higher micronaire value or a larger diameter on a surface layer of at least one of the faces of the said product, especially so as to give the said product a mechanically strengthened external superficial layer and/or to improve the gluing of a supporting sheet and/or to improve the printing of information an said superficial layer.

16. Insulation product according to Claim 15, ***characterized in that*** it is a felt which is to be rolled, its external surface being mechanically strengthened.

17. Use of the process according to one of Claims 1 to 9 for obtaining a thermal/acoustic insulation product having thermal/mechanical/chemical or resistance towards fire or hydrophobicity or appearance properties which vary through its thickness.

## Patentansprüche

1. Verfahren zur Herstellung eines Wärme- und/oder Schalldämmerzeugnisses auf der Basis von Mineralwolle durch Innenschleudern mit einer Produktionslinie, die n, n > 2, in Reihe geschaltete Spinnorgane umfasst, **dadurch gekennzeichnet, dass** mindestens ein Spinnparameter von zwei aufeinander folgenden Spinnorganen der Produktionslinie auf eine andere Weise geregelt wird.

2. Verfahren nach Anspruch 1, **dadurch gekennzeichnet, dass** mindestens ein Spinnparameter des ersten oder der zwei ersten und/oder des letzten oder der zwei letzten Spinnorgane auf eine andere Art als die Regelung geregelt wird, die für die anderen Spinnorgane der Produktionslinie durchgeführt wird.

3. Verfahren nach Anspruch 1 oder 2, **dadurch gekennzeichnet, dass** jedes Produktionsorgan:
- eine Zentrifuge, die in der Lage ist, sich um eine insbesondere vertikale Achse zu drehen, und deren Mantel mit einer Vielzahl von Öffnungen durchbohrt ist,
- ein Gasziehmittel mit hoher Temperatur in Form eines Ringbrenners,
- gegebenenfalls ein pneumatisches Mittel in Form eines Blasrings, um die Fasern zu leiten, und
- gegebenenfalls ein Mittel, um eine Bindemittelzusammensetzung auf die aus der Zentrifuge kommenden Fasern aufzubringen, beispielsweise in Form eines Sprührings für das Bindemittel,
umfasst.

4. Verfahren nach Anspruch 3, **dadurch gekennzeichnet, dass** der Spinnparameter, der je nach Spinnorgan anders geregelt wird, aus wenigstens einem der folgenden Parameter ausgewählt wird:
- Menge oder Charakter der Bindemittelzusammensetzung, die von dem Mittel zum Aufbringen dieser Zusammensetzung verteilt wird,
- Druck des Gases, das vom Blasring abgegeben wird,
- Anzahl der Öffnungen der Zentrifuge,
- chemische Zusammensetzung des Glases, dessen Viskosität und Temperatur,
- Temperatur oder Geschwindigkeit des von dem Ringbrenner ausgestoßenen Gases und
- Temperatur der Zentrifuge.

5. Verfahren nach einem der vorhergehenden Ansprüche, **dadurch gekennzeichnet, dass** der für ein oder mehrere Spinnorgane anders geregelte Spinnparameter das Hinzufügen einer Stufe zum Aufbringen, insbesondere durch ein Mittel vom Typ eines Sprührings, einer Zusammensetzung mit weichmachenden Eigenschaften, die ein kationisches und/oder nichtionisches Tensid enthält, ist.

6. Verfahren nach Anspruch 3 oder 4, **dadurch gekennzeichnet, dass**
- der Druck des Gases, das von dem Blasring des ersten und/oder letzten Spinnorgans ausgestoßen wird, niedriger als derjenige der anderen Spinnorgane ist, speziell um mindestens 20 % und vorzugsweise zwischen 30 und 50 % niedriger, insbesondere derart, dass das Dämmerzeugnis eine Oberflächenschicht in wenigstens einem Teil seiner Außenfläche aufweist, die längere Fasern besitzt.

7. Verfahren nach Anspruch 3, 4 oder 6, **dadurch gekennzeichnet, dass**
- der Druck des von dem Ringbrenner des ersten oder der zwei ersten und/oder des letzten oder der zwei letzten Spinnorgane ausgestoßenen Gases größer als derjenige der Brenner der anderen Organe, speziell um etwa 10 bis 25 %, ist und/oder
- die Anzahl Löcher in der Zentrifuge der ersten oder der zwei ersten und/oder der letzten oder der zwei letzten Zentrifugen, speziell um 15 bis 25 % Löcher, größer als die der anderen Zentrifugen insbesondere derart ist, dass das Dämmerzeugnis eine Oberflächenschicht aufweist, die in wenigstens einem Teil der Außenfläche Fasern mit einem kleineren Durchmesser oder Micronaire-Wert besitzt.

8. Verfahren nach Anspruch 3, 4 oder 6, **dadurch gekennzeichnet, dass**
- der Druck des Gases, das von dem Ringbrenner des ersten oder der zwei ersten und/oder des letzten oder der zwei letzten Spinnorgane ausgestoßen wird, niedriger als derjenige der Brenner der anderen Organe, insbesondere um etwa 10 bis 25 % niedriger, ist und/oder
- die Anzahl Löcher in der Zentrifuge der ersten oder der zwei ersten und/oder der letzten oder der zwei letzten Zentrifugen, speziell um 15 bis 25 % Löcher, kleiner als die der anderen Zentrifugen insbesondere derart ist, dass das Dämmerzeugnis eine Oberflächenschicht aufweist, die in wenigstens einem Teil der Außenfläche Fasern mit einem größeren Durchmesser oder Micronaire-Wert besitzt.

9. Verfahren nach einem der Ansprüche 3, 4, 6, 7 oder 8, **dadurch gekennzeichnet, dass** eine geringere Menge an Bindemittelzusammensetzung auf die Fasern, die aus dem ersten oder den beiden ersten und/oder dem letzten oder den beiden letzten Spinnorganen kommen, insbesondere mindestens 10 oder 20 % Bindemittelzusammensetzung weniger, derart aufgesprüht wird, dass das Dämmerzeugnis an der Oberfläche in wenigstens einem Teil der Außenfläche einen geringeren Bindemittelgehalt als in der Dicke hat.

10. Wärme- und/oder Schalldämmerzeugnis auf Mineralwollebasis, das insbesondere gemäß dem Verfahren nach einem der vorhergehenden Ansprüche erhalten worden ist, **dadurch gekennzeichnet, dass** es in seinen Schichten, mit n gleich Anzahl der Schichten und n > 2, seiner Dicke Veränderungen in mindestens einem seiner Kennwerte, insbesondere Veränderungen in den Abmessungen der Fasern der Mineralwolle oder in der chemischen Zusammensetzung der Mineralwolle des Erzeugnisses, aufweist.

11. Wärme- und/oder Schalldämmerzeugnis auf Mineralwollebasis, das insbesondere gemäß dem Verfahren nach einem der Ansprüche 1 bis 9 erhalten worden ist, **dadurch gekennzeichnet, dass** es in der Dicke Veränderungen seiner mechanischen Eigenschaften und/oder seiner Wärme-/Schalldämmeigenschaften und/oder seiner Reaktion oder Beständigkeit gegenüber Feuer und/oder seines hydrophoben Charakters aufweist.

12. Wärme- und/oder Schalldämmerzeugnis nach Anspruch 10 oder 11, **dadurch gekennzeichnet, dass** es in Form eines Filzes vorliegt, der Schichten mit verschiedenen Kennwerten/Eigenschaften und insbesondere auf wenigstens einer Seite eine Oberflächenschicht mit anderen Kennwerten/Eigenschaften als denjenigen des Erzeugnisses im Kern aufweist.

13. Wärme- und/oder Schalldämmerzeugnis nach Anspruch 12, **dadurch gekennzeichnet, dass** die Fasern der Mineralwolle einen kleineren Micronaire-Wert oder Durchmesser und/oder eine größere Länge in einer Oberflächenschicht auf wenigstens einer Seite des Erzeugnisses haben, insbesondere, um dem Erzeugnis einen angenehmeren Griff zu verleihen.

14. Wärmedämmerzeugnis nach Anspruch 12 oder 13, **dadurch gekennzeichnet, dass** die Fasern der Mineralwolle einen geringeren und/oder anderen Bindemittelzusammensetzungsgehalt haben und/oder mit einer zusätzlichen Zusammensetzung mit weichmachenden Eigenschaften, die ein Tensid umfasst, auf einer Oberflächenschicht auf wenigstens einer Seite des Erzeugnisses imprägniert sind, insbesondere; um dem Erzeugnis einen angenehmeren Griff zu verleihen.

15. Wärme- und/oder Schalldämmerzeugnis nach Anspruch 12, **dadurch gekennzeichnet, dass** die Fasern der Mineralwolle einen höheren Micronaire-Wert oder Durchmesser in einer Oberflächenschicht auf wenigstens einer Seite des Erzeugnisses haben, insbesondere, um dem Erzeugnis eine mechanisch verstärkte Außenfläche zu verleihen, die Klebverbindung mit einem Träger zu verbessern oder das Bedrucken dieser Oberflächenschicht zu erleichtern.

16. Dämmerzeugnis nach Anspruch 15, **dadurch gekennzeichnet, dass** es sich um einen Filz handelt, der vorgesehen ist, aufgewickelt zu werden, und welcher auf der Außenfläche mechanisch verstärkt ist.

17. Anwendung des Verfahrens nach einem der Ansprüche 1 bis 9 zur Herstellung eines Wärme-/Schalldämmerzeugnisses mit thermischen/mechanischen/chemischen/schalldämmenden/flammfesten und hydrophoben Eigenschaften oder einem in der Dicke variierenden Aussehen.
